Europäisches Patentamt

European Patent Office

Office européen des brevets

(19)

(11) Numéro de publication: **0 079 276**
**B1**

(12) **FASCICULE DE BREVET EUROPEEN**

(45) Date de publication du fascicule du brevet: **28.01.87**

(51) Int. Cl.⁴: **G 01 J 9/04**

(21) Numéro de dépôt: **82402008.5**

(22) Date de dépôt: **29.10.82**

(54) **Dispositif et procédé pour mesurer les déformations de surface d'onde introduites par un systeme optique.**

(30) Priorité: **06.11.81 FR 8120840**
**30.04.82 FR 8207499**
**03.05.82 FR 8207645**

(43) Date de publication de la demande:
**18.05.83 Bulletin 83/20**

(45) Mention de la délivrance du brevet:
**28.01.87 Bulletin 87/05**

(84) Etats contractants désignés:
**CH DE GB IT LI NL SE**

(56) Documents cités:
**US-A-2 796 495**
**US-A-3 930 732**
**US-A-4 188 122**
**US-A-4 189 671**

**APPLIED OPTICS, vol. 18, no. 5, 1er mars 1979,
pages 615-622, New York (USA); R. KRISTAL:
"Rapid spatially scanning ir heterodyne
interferometer".**

(73) Titulaire: **COMMISSARIAT A L'ENERGIE
ATOMIQUE Etablissement de Caractère
Scientifique Technique et Industriel
31/33, rue de la Fédération
F-75015 Paris (FR)**

(72) Inventeur: **Picard, Bernard
8, rue Georges Bizet
F-38400 Saint Martin d'Heres (FR)**

(74) Mandataire: **Mongrédien, André et al
c/o BREVATOME 25, rue de Ponthieu
F-75008 Paris (FR)**

(56) References cited:

**"Photoeleastic and Electro-Optic Properties of
Crystals", T.S. Narasimhamurty, Plenum Press,
New-York and London, 1981, pages 289, 294**

Courier Press, Leamington Spa, England.

## Description

La présente invention a pour objet un dispositif et un procédé permettant de mesurer les déformations de surface d'onde introduites par un système optique et notamment par un objectif, ces déformations étant principalement liées à la fonction de transfert du système optique en éclairage cohérent. Cette mesure est effectuée à partir de l'étude de la transmission, par le système optique, l'ondes lumineuses sinusoïdales et cohérentes.

On va brièvement rappeler le principe d'une telle mesure.

En lumière cohérente, l'image d'une répartition sinusoïdale d'intensité, fournie par un système optique, est un répartition sinusoïdale d'intensité de même amplitude mais de phase différente. La phase de la répartition sinusoïdale image dépend de la qualité de transmission du système optique. Cette phase notée $\varphi(v)$ qui définit la fonction de transfert du système optique en éclairage cohérent dépend d'un coefficient $\Delta(v)$ qui caractérise les déformations de surface d'onde introduites par le système optique et qui dépend, lui-même, de la fréquence spatiale $v$ de l'onde lumineuse.

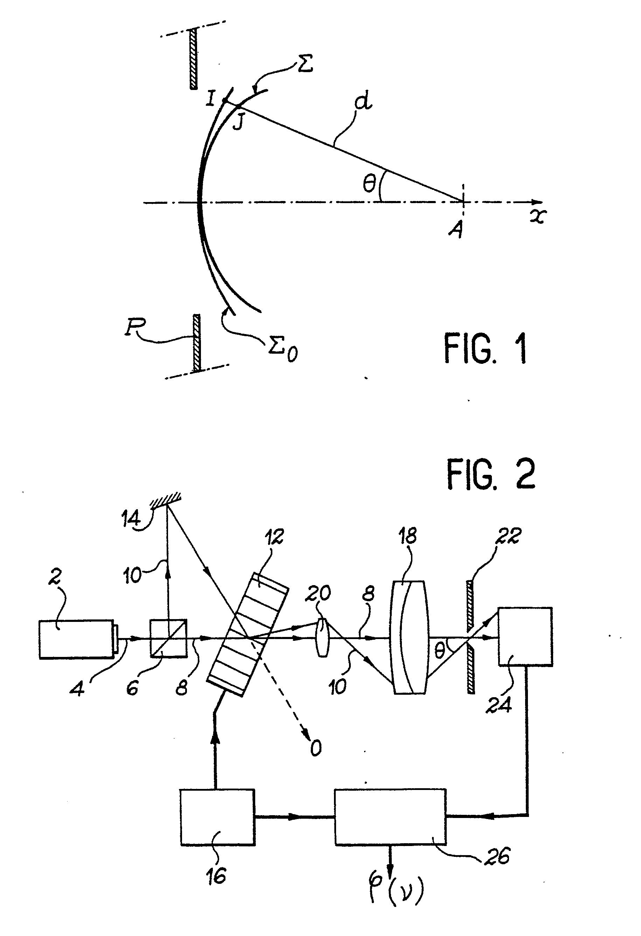

La définition du coefficient $\Delta(v)$ est illustrée par la figure 1. Sur cette figure $\Sigma_0$ et $\Sigma$ représentent respectivement la surface d'onde de référence et la surface d'onde réelle de l'onde lumineuse transmise par le système optique. Dans le cas où on aurait affaire à un système optique parfait, c'est-à-dire sans aberration, la surface d'onde $\Sigma$ et la surface d'onde $\Sigma_0$ seraient confondues. La surface d'onde de référence $\Sigma_0$ peut être définie comme étant la sphère centrée sur le point image A et tangente à la pupille de sortie P du système optique.

Soit une droite d faisant un angle $\theta$ avec un axe x représentant la direction de propagation de l'onde lumineuse. Cette droite d coupe la surface d'onde de référence $\Sigma_0$ en un point I et la surface d'onde réelle $\Sigma$ en un point J. La valeur algébrique $\overline{IJ}$ représente le coefficient $\Delta(v)$.

Pour une longueur d'onde lumineuse donnée $\lambda$, la fréquence spatiale $v$ de l'onde transmise par le système optique est définie par la relation

$$v = \frac{\sin\theta}{\lambda}$$

et la phase $\varphi(v)$ de cette onde est définie par

$$\varphi(v) = \frac{2\pi\Delta(v)}{\lambda}$$

On connaît des dispositifs pour tester un système optique transmissif tels que ceux décrits dans les documents US—A—3 930 732 et US—A—3 796 495, des dispositifs pour tester un miroir tels que celui décrit dans le document US—A—4 188 122 et des dispositifs pour déterminer la densité d'un plasma tels que décrits dans les documents US—A—4 183 671 et Applied Optics, vol. 18, n° 5, 1er mars 1979, p. 615—622, New York.

Ces dispositifs connus jusqu'à ce jour ne permettent pas de déterminer directement le coefficient $\Delta(v)$ d'un système optique transmissif et donc de déterminer directement les déformations de surfaces d'onde introduites par celui-ci; la détermination de ces déformations, au moyen des dispositifs de l'art antérieur est très complexe à effectuer.

La présente invention a justement pour objet un dispositif et un procédé permettant de remédier à ces inconvénients. De mise en oeuvre simple, elle permet la détermination directe des déformations de surface d'onde introduites par un système optique.

De façon plus précise, l'invention a pour objet un dispositif pour tester, en lumière cohérente, un système optique transmissif, comprenant au moins un objectif, comportant:

— des moyens susceptibles d'émettre un faisceau principal de lumière monochromatique et cohérente;

— une cellule de Bragg susceptible de recevoir au moins un faisceau en provenance des moyens d'émission, cette cellule étant excitée par des ondes radiofréquences émises par un générateur radiofréquence de façon à émettre un premier faisceau et un second faisceau présentant des fréquences temporelles différentes;

— des moyens envoyant le premier faisceau et le second faisceau, émis par la cellule de Bragg, directement sur le système optique à tester;

— des moyens de détection aptes à transformer le signal lumineux issu du système optique en un signal électrique; et

— des moyens permettant de mesurer le déphasage entre la phase du signal électrique émis par les moyens de détection et la phase des ondes radiofréquences servant à exciter la cellule de Bragg,
se caractérisant en ce que les moyens de détection reçoivent les premier et second faisceaux après qu'ils aient traversé le système optique sans traverser d'autres éléments optiques, sauf la fente d'entrée des moyens de détection, et produisent un signal électrique de fréquence égale à la différence des fréquences temporelles des faisceaux émis par la cellule de Bragg et dont la phase est caractéristique des déformations de surface d'onde introduites par ledit système.

Le dispositif de l'invention permet, contrairement aux dispositifs connus, la détermination directe des déformations de surface d'onde introduites par un système optique qui peut être un simple objectif. Cette détermination se fait de façon simple et de façon précise puisque la mesure du déphasage entre deux signaux électrique est une mesure simple et qui peut être effectuée avec une grande précision. De plus, la simplicité de la mesure réside dans l'utilisation d'une lumière monochromatique et cohérente.

Il est à noter que le dispositif de l'invention, contrairement au dispositif de l'art antérieur, ne comporte aucun élément mécanique mobile.

Selon une première variante de réalisation du dispositif de l'invention, la cellule de Bragg est excitée par deux ondes radiofréquences de fréquences différentes de façon à engendrer par diffraction du faisceau principal, le faisceau de référence et le faisceau de mesure.

Selon une deuxième variante de réalisation du dispositif de l'invention, celui-ci comprend des moyens permettant de séparer le faisceau principal en un faisceau de référence et en un faisceau de mesure et la cellule de Bragg est excitée par une seule onde radiofréquence de façon à transmettre directement le faisceau de référence et à transmettre par diffraction le faisceau de measure.

Selon un mode préféré de réalisation du dispositif de l'invention, la fente est située dans le plan image du système optique à tester.

Selon un autre mode préféré de réalisation du dispositif de l'invention, celui-ci comprend, de plus, un prisme présentant la forme d'un coin de cube, situé dans le plan image du système optique à tester, permettant de réfléchir le faisceau de référence et le faisceau de mesure vers les moyens de détection, la direction du faisceau de référence réfléchi et la direction du faisceau de mesure réfléchi étant respectivement opposées à la direction du faisceau de référence incident et à la direction du faisceau de mesure incident.

Lorsque l'on utilise deux ondes radiofréquences pour exciter la cellule de Bragg, la différence de fréquence entre la fréquence de l'une des ondes radiofréquences et la fréquence de l'autre onde radiofréquence peut être constante; cette différence constante conduit à l'émission, par les moyens de détection d'un signal électrique dont la phase représente la dérivée, par rapport à la fréquence spatiale du signal lumineux issu du système optique, des déformations de surface introduites par le système optique à tester. Le dispositif comprend alors, après les moyens de mesure, des moyens permettant l'intégrer le signal fourni par les moyens de mesure afin d'obtenir la phase caractéristique desdites déformations.

Selon un autre mode préféré de réalisation du dispositif de l'invention, le générateur radiofréquence émet soit deux fréquences variables soit deux fréquences fixes.

Selon un autre mode préféré de réalisation du dispositif de l'invention, les moyens permettant d'envoyer les faisceaux de référence et de mesure en direction du système optique à tester sont constitués d'au moins une lentille convergente ou d'un système de déflexion.

Selon un autre mode préféré de réalisation du dispositif de l'invention, les moyens émettant le faisceau principal de lumière monochromatique et cohérente sont constitués par un laser.

L'invention a aussi pour objet un procédé pour tester, en lumière cohérente, un système optique transmissif consistant à:

a) diriger sur une cellule de Bragg au moins un faisceau de lumière monochromatique et cohérente,

b) exciter cette cellule, par des ondes radiofréquences émises par un générateur radiofréquence, de façon à émettre un premier faisceau et un second faisceau présentant des fréquences temporelles différentes;

c) envoyer directement sur le système optique à tester le premier faisceau et le second faisceau émis par ladite cellule;

d) détecter le signal lumineux issu du système optique à tester au moyen d'un détecteur apte à transformer ce signal lumineux en un signal électrique; et,

e) mesurer le déphasage entre la phase du signal électrique émis par le détecteur et la phase des ondes radiofréquences servant à exciter la cellule de Bragg, caractérisé en ce qu'il consiste également à recevoir les premier et second faisceaux après qu'ils aient traversé le système optique sans traverser d'autres éléments, sauf la fente d'entrée des moyens de détection, pour que ces moyens produisent un signal électrique de fréquence égale à la différence des fréquences temporelles des faisceaux émis par la cellule de Bragg et dont la phase est caractéristique des déformations de surface d'onde introduites par ledit système.

Selon une première variante de mise en oeuvre du procédé de l'invention, on envoie sur la cellule de Bragg un faisceau lumineux principal et on excite ladite cellule au moyen de deux ondes radiofréquences de fréquences différentes de façon à engendrer le faisceau de référence et le faisceau de mesure par diffraction du faisceau principal.

Selon une deuxième variante de mise en oeuvre du procédé de l'invention, on envoie sur la cellule de Bragg le faisceau de référence et le faisceau de mesure et on excite ladite cellule au moyen d'une seule onde radiofréquence de façon à transmettre directement le faisceau de référence et à transmettre le faisceau de mesure par diffraction.

Selon un mode préféré de mise en oeuvre du procédé de l'invention, après l'étape c, on réfléchit le faisceau de référence et le faisceau de mesure issus du système optique au moyen d'un prisme présentant la forme d'un coin de cube, situé dans le plan image du système optique à tester, de façon que la direction du faisceau de référence réfléchi et la direction du faisceau de mesure réfléchi soient respectivement opposées à la direction du faisceau de référence incident et à la direction du faisceau de mesure incident, puis on détecte le signal lumineux issu du prisme au moyen du détecteur.

Lorsque l'on excite la cellule de Bragg par deux ondes radiofréquences, la différence de fréquence entre la fréquence de l'une des ondes radiofréquences et la fréquence de l'autre onde radiofréquence peut être constante; cette différence constante conduit à l'émission d'un signal électrique dont la phase représente la dérivée, par rapport à la fréquence spatiale du signal lumineux issu du système optique, des déformations de surface d'onde introduites par le système optique à tester. On réalise alors, après l'étape e, une intégration du signal fourni par les moyens de mesure au moyen d'un intégrateur afin d'obtenir la phase caractéristique desdites déformations.

Selon un autre mode préféré de mise en oeuvre du procédé de l'invention, on modifie de façon continue la fréquence des ondes radiofréquences par action directe sur le générateur radiofréquence.

Selon un autre mode préféré de mise en oeuvre du procédé de l'invention, avant de mesurer les déformations de surface d'onde introduites par le système optique à tester, on étalonne le dispositif en déterminant l'évolution de la phase du signal électrique émis par le détecteur, cet étalonnage étant fait en l'absence du système optique à tester et en plaçant, soit la fente, soit le prisme, soit le détecteur, suivant le mode de réalisation, directement dans le plan image de la lentille servant à envoyer sur le système optique à tester les faisceaux de référence et de measure, émis par la cellule de Bragg. Dans certains cas, la lentille convergente peut être remplacée par un système de déflexion.

D'autres caractéristiques et avantages de l'invention ressortiront mieux de la description qui va suivre, donnée à titre illustratif mais non limitatif, en référence aux figures annexées sur lesquelles:

— la figure 1, déjà décrite, définit les déformations de surface d'onde introduites par un système optique,

— la figure 2 représente, schématiquement, une première variante du dispositif de l'invention, dans laquelle la cellule de Bragg reçoit un faisceau de mesure et un faisceau de référence, la cellule étant excitée par une seule onde radiofréquence,

— la figure 3 représente, schématiquement, une deuxième variante du dispositif de l'invention, dans laquelle la cellule de Bragg est excitée par deux ondes radiofréquences de fréquences différentes, l'une étant fixe, l'autre variable,

— la figure 4 représente, schématiquement, une troisième variante du dispositif de l'invention, dans laquelle on utilise le prisme en coin de cube pour réfléchir les faisceaux de mesure et de référence sur le détecteur,

— la figure 5 représente, schématiquement, une quatrième variante du dispositif de l'invention, dans laquelle on utilise deux ondes radiofréquences de fréquences différentes, ces fréquences étant toutes deux variables,

— la figure 6 représente, schématiquement, une cinquième variante du dispositif de l'invention, dans laquelle on utilise deux ondes radiofréquences, ces fréquences étant toutes deux constantes.

Sur la figure 2, on a représenté une première variante du dispositif de l'invention. Ce dispositif comprend, notamment, une source lumineuse 2 susceptible d'émettre un faisceau principal de lumière 4 monochromatique et cohérente de fréquence temporelle vo, qui peut être par exemple un laser, et des moyens tels qu'un cube séparateur 6, permettant de séparer le faisceau de lumière 4 en deux faisceaux lumineux, un faisceau de référence 8 et un faisceau de mesure 10.

Ce dispositif comprend, de plus, selon l'invention, une cellule de Bragg 12 susceptible de recevoir les deux faisceaux lumineux 8 et 10, le faisceau de mesure 10, dévié par les moyens de séparation 6, étant renvoyé en direction de la cellule au moyen d'un miroir réfléchissant tel que 14. Cette cellule de Bragg, ou cellule acousto-optique, est faite en un cristal de quartz couplé à un transducteur piézoélectrique. Dans cette variante, la cellule de Bragg peut être excitée par une onde radiofréquence de fréquence f, émise par un générateur radiofréquence 16. Cette cellule 12 excitée peut transmettre directement le faisceau de référence 8, ce faisceau 8 présentant, alors, la fréquence temporelle vo, et diffracter le faisceau de mesure 10, ce faisceau 10 présentant, alors, une fréquence temporelle vo+f, f étant la fréquence d'excitation de la cellule.

La diffraction du faisceau de mesure 10 est obtenue par une modification de l'indice de réfraction de la cellule, consécutive à l'onde radiofréquence excitant ladite cellule. Les traits représentés dans la cellule de Bragg représentent les plans de vibration ou plans d'onde du cristal au niveau desquels peut être diffracté le faisceau de mesure 10.

La valeur de la fréquence f d'excitation de la cellule, donc celle de la fréquence spatiale de l'onde excitatrice, peut être modifiée de façon continue par action directe sur le générateur radiofréquence 16. Cette fréquence spatiale v peut varier dans une gamme de valeurs comprise entre O et vc, vc représentant la fréquence de coupure du système optique 18 que l'on désire tester, ce système optique pouvant être un simple objectif. Le fait de modifier la fréquence d'excitation de la cellule permet d'explorer toute la surface du système optique 18.

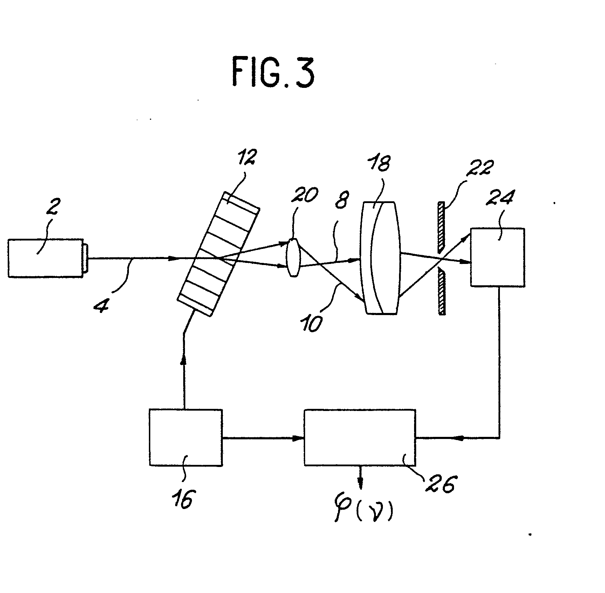

Sur la figure 3, on a représenté une deuxième variante du dispositif de l'invention. Ce dispositif comprend comme précédemment une source lumineuse 2 susceptible d'émettre un faisceau principal de lumière 4 monochromatique et cohérente de fréquence temporelle vo, qui peut être par exemple un laser, et une cellule de Bragg 12.

Dans cette deuxième variante la cellule de Bragg 12 qui est susceptible de recevoir directement le faisceau principal de lumière 4, est excitée par deux ondes radiofréquences émises par un générateur radiofréquence 16. L'une de ces ondes présente une fréquence fixe fo, l'autre une fréquence f pouvant être modifiée de façon continue. La cellule de Bragg 12, ainsi excitée, peut émettre par diffraction du faisceau principal 4 un premier faisceau 8 servant de faisceau de référence et présentant une fréquence temporelle vo+fo et un deuxième faisceau lumineux servant de faisceau de mesure 10 et présentant une fréquence temporelle vo+f. La diffraction du faisceau principal 4 par la cellule de Bragg est obtenue comme précédemment.

Dans cette deuxième variante, l'onde radiofréquence, de fréquence variable f, est telle que:

$$fo - \frac{\Delta f}{2} < f < fo + \frac{\Delta f}{2},$$

$\Delta f$ étant la bande passante de la cellule de Bragg.

Pour les deux variantes décrites ci-dessus, le dispositif comprend, aussi, une lentille convergente 20 permettant d'envoyer le faisceau de référence 8 et le faisceau de mesure 10, émis par la cellule de Bragg, en direction du système optique 18. De plus, cette lentille 20 permet d'adapter les caractéristiques angulaires de la cellule de Bragg (angle de diffraction des faisceaux lumineux) en fonction de celles des système optiques à tester (angle θ).

Le dispositif comprend, de plus, une fente. 22 placée dans le plan image du système optique à étudier. Sur cette 22, un système de franges d'interférences sinusoïdales est formé à partir des deux faisceaux lumineux 8 et 10, transmis par le système optique 18. Etant donné que les deux faisceaux lumineux qui intéfèrent ne présentent pas la même fréquence temporelle, vo (figure 1) ou vo+fo (figure 2) pour le faisceau de référence 8, et vo+f pour le faisceau de mesure 10, les franges d'interférences se translatent à une vitesse uniforme.

Le signal lumineux, résultant de la translation uniforme des franges d'interférence, peut être recueilli par un détecteur 24 tel qu'un photomultiplicateur qui transforme ce signal lumineux en un signal électrique de fréquence égale à la différence des fréquences temporelles des faisceaux lumineux 8 et 10 arrivant sur le détecteur, c'est-à-dire de fréquence f pour la première variante et de fréquence f-fo pour la deuxième. La phase φ(v) de ce signal électrique est caractéristique des déformations de surface d'onde introduites par le système optique 18. Cette phase φ(v) peut être mesurée par un dispositif 26, qui peut être par exemple un phasemètre. Ce dispositif 26 compare la phase du signal électrique délivré par le détecteur 24 et la phase d'un signal électrique correspondant aux ondes radiofréquences émises par le générateur radiofréquence 16. Le signal électrique correspondant aux ondes radiofréquences émises par le générateur 16 est engendré par le générateur lui-même.

La mesure des déformations de surface d'onde introduites par un système optique se fait comme décrit ci-dessus. Cependent, avant de mesurer ces déformations il est nécessaire d'effectuer un étalonnage du dispositif afin de s'assurer que la phase du signal électrique, délivrée par le détecteur 24, est bien la phase φ(v) caractéristique du système optique que l'on étudie. Cet étalonnage consiste à mesurer l'évolution de la phase, introduite par le dispositif de mesure lui-même, en plaçant la fente 22 directement dans le plan image de la lentille convergent 20, et ce, en l'absence du système optique à étudier.

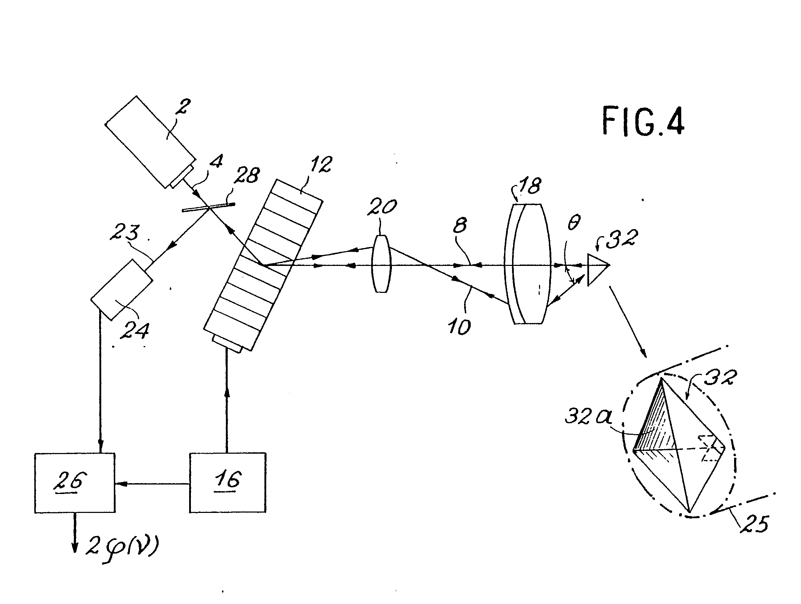

Sur la figure 4, on a représenté une troisième variante du dispositif de l'invention. Ce dispositif comprend, comme précédemment, une source lumineuse 2 susceptible d'émettre un faisceau principal de lumière 4 monochromatique et cohérente de fréquence temporelle $v_o$, qui peut être par exemple un laser, et une cellule de Bragg 12 qui est susceptible de recevoir le faisceau principal de lumière 4.

Dans cette troisième variante, la cellule de Bragg 12 est notamment excitée par deux ondes radiofréquences émises par un générateur radiofréquence 16. L'une de ces ondes présente une fréquence fixe $f_o$, l'autre une fréquence f pouvant être modifiée de façon continue. La cellule de Bragg 12, ainsi excitée, peut émettre par diffraction du faisceau principal 4 un premier faisceau 8 servant de faisceau de référence et présentant une fréquence temporelle $v_o + f_o$ et un deuxième faisceau lumineux servant de faisceau de mesure 10 et présentant une fréquence temporelle $v_o + f$. La diffraction du faisceau principal 4, par la cellule de Bragg est obtenue comme dans la première variante.

La valeur de la fréquence d'excitation f, donc celle de la fréquence spatiale de l'onde excitatrice, peut être modifiée de façon continue par action directe sur le générateur radiofréquence 16. Cette fréquence variable f est telle que:

$$f_o - \frac{\Delta f}{2} < f < f_o + \frac{\Delta f}{2},$$

$\Delta f$ étant la bande passante de la cellule de Bragg.

Le dispositif comprend, aussi, une lentille convergente 20 permettant d'envoyer le faisceau de référence 8 et le faisceau de mesure 10 émis par la cellule de Bragg, en direction du système optique 18. Comme précédemment, cette lentille 20 permet d'adapter les caractéristiques angulaires de la cellule de Bragg en fonction de celles des systèmes optiques à tester.

Dans cette troisième variante, le dispositif comprend, de plus, un prisme 32 présentant la forme d'un trièdre tri-rectangle, c'est-à-dire d'un coin de cube, situé dans le plan image du système optique 18 à tester. Le prisme 32 permet de réfléchir le faisceau de référence 8 et le faisceau de mesure 10 de façon que la direction du faisceau de référence 8 réfléchi par le prisme 32 et la direction du faisceau de mesure 10 réfléchi par le prisme 32 soient respectivement opposées à la direction du faisceau de référence 8 incident et à la direction du faisceau de mesure 10 incident et ce, quelle que soit l'orientation des faisceaux incidents.

Ce prisme 32 peut être, soit un coin de cube plein en verre utilisant le principe de la réflexion totale, soit un coin de cube taillé en creux dans un bloc de verre cylindrique 25 tel que représenté sur la figure. Dans ce dernier cas, les faces 32a du coin de cube en creux doivent être traitées de façon à obtenir un pouvoir réfléchissant de 100%. Ces faces 32a peuvent être par exemple métallisées.

Les faisceaux de référence 8 et de mesure 10 réfléchis sur eux-mêmes traversent à nouveau la lentille convergente 20 et la cellule de Bragg 12 (principe du retour inverse de la lumière). La cellule de Bragg, excitée par les deux ondes radiofréquences respectivement de fréquence fixe $f_o$ et de fréquence variable f, engendre, comme précédemment, par diffraction du faisceau de référence 8 et du faisceau de mesure 10 réfléchis, un faisceau secondaire 23 confondu avec le faisceau lumineux principal 4. Ce faisceau secondaire 23 est en fait formé de deux faisceaux lumineux, l'un de référence et l'autre de mesure présentant respectivement une fréquence temporelle $v_o+2f_o$ et $v_o+2f$.

Après séparation de ces deux faisceaux lumineux, c'est-à-dire du faisceau secondaire 23, du faisceau principal 4 au moyen d'un dispositif 28 constitué par exemple d'une lame semi-réfléchissante, le signal lumineux peut être recueilli par un détecteur 24 tel qu'un photomultiplicateur, qui transforme ce signal en un signal électrique de fréquence égale à la différence des fréquences temporelles des faisceaux lumineux arrivant sur le détecteur, c'est-à-dire de fréquence $2(f-f_o)$. La phase $2\varphi(v)$ de ce signal électrique est caractéristique des déformations de surface d'onde introduites par le système optique 18. Cette phase $2\varphi(v)$, qui dépend de la fréquence temporelle v de l'onde lumineuse transmise par le système optique, v étant ici égal à 2 $(f-f_o)$, peut être mesurée par un dispositif 26, qui peut être par exemple un phasemètre. Comme précédemment, ce dispositif 26 compare la phase du signal électrique délivré par le détecteur 24 et la phase d'un signal électrique correspondant aux ondes radiofréquences émises par le générateur radiofréquence 16. Le signal électrique correspondant aux ondes radiofréquences émises par le générateur 16 est engendré par le générateur lui-même.

Il est à noter que, dans cette troisième variante du dispositif, la phase du signal électrique émis par le détecteur 24 est double de celle du signal électrique émis par le détecteur, dans les première et deuxième variantes du dispositif. Ceci est lié à la double traversée du système optique 18 à étudier par les faisceaux de référence et de mesure.

La mesure des déformations de surface d'onde introduites par un système optique, à l'aide de cette troisième variante, se fait comme décrit ci-dessus. Cependant, avant de mesurer ces déformations, il est nécessaire d'effectuer un étalonnage du dispositif afin de s'assurer que la phase du signal électrique, délivrée par le détecteur 24 est bien la phase $2\varphi(v)$ caractéristique du système optique que l'on étudie. Cet étalonnage consiste à mesurer l'évolution de la phase introduite par le dispositif de mesure lui-même, en plaçant le prisme 32 en coin de cube directement dans le plan image de la lentille convergente 20, et ce, en l'absence du système optique à étudier.

Dans cette troisième variante, il n'a été envisagé que l'utilisation de deux ondes radiofréquences pour exciter la cellule de Bragg, celle-ci ne recevant que le faisceau principal 4 émis par la source lumineuse 2. Comme dans la première variante, on peut exciter la cellule de Bragg à l'aide d'une seule onde radiofréquence de fréquence variable f, la cellule recevant alors les faisceaux de référence 8 et de mesure 10.

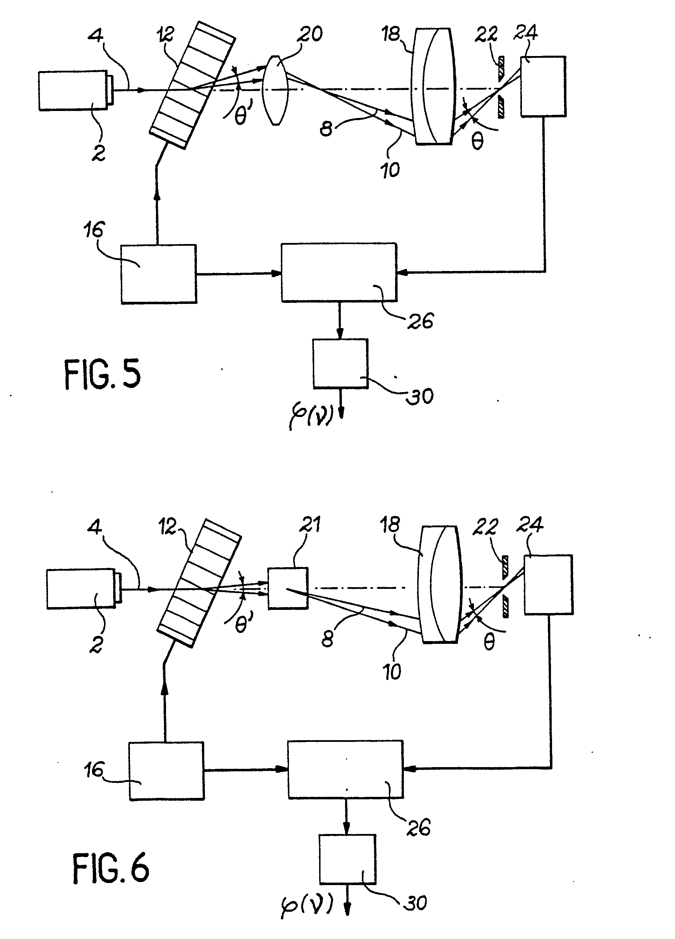

Sur les figures 5 et 6, on a représenté respectivement une quatrième et une cinquième variantes du dispositif de l'invention.

En se référant aux figures 5 et 6, le dispositif de l'invention comprend, comme précédemment, une source lumineuse 2 susceptible d'émettre un faisceau principal de lumière 4 monochromatique et cohérente de fréquence temporelle $v_o$, qui peut être par exemple un laser, et une cellule de Bragg 12 susceptible de recevoir le faisceau principal de lumière 4.

Dans ces deux variantes, la cellule de Bragg 12 est excitée par deux ondes radiofréquences émises par un générateur radiofréquence 16. L'une de ces ondes présente une fréquence $f_1$, l'autre une fréquence $f_2$, différente de $f_1$. Comme précédemment, la cellule de Bragg 12, ainsi excitée, peut émettre par diffraction du faisceau principal 4 un premier faisceau 8 servant par exemple de faisceau de référence et présentant une fréquence temporelle $v_0+f_1$ et un deuxième faisceau lumineux servant par exemple de faisceau de mesure 10 et présentant une fréquence temporelle $v_0+f_2$.

Dans ces deux variantes, les fréquences d'excitation de la cellule de Bragg, respectivement $f_1$ et $f_2$, sont telles que leur différence soit égale à une constante.

Dans la quatrième variante, représentée sur la figure 5, les deux fréquences $f_1$ et $f_2$ sont deux fréquences variables. La valeur de ces fréquences d'excitation, donc celle de la fréquence spatiale de l'onde excitatrice correspondante, peut être modifiée de façon continue par action directe sur le générateur radiofréquence 16. La fréquence spatiale correspondant à chacune des deux fréquences d'excitation peut varier dans une gamme de valeurs comprise entre O et $v_c$, $v_c$ représentant la fréquence de coupure du système optique 18 que l'on désire tester, ce système optique pouvant être un simple objectif. Comme précédemment (première variante), le fait de modifier les fréquences d'excitation de la cellule permet d'explorer toute la surface du système optique 18.

Dans cette quatrième variante, le dispositif comprend, comme précédemment, une lentille convergente 20 permettant d'envoyer le faisceau de référence 8 et le faisceau de mesure 10, émis par la cellule de Bragg, en direction du système optique 18; cette lentille 20 permet d'adapter les caractéristiques angulaires de la cellule de Bragg en fonction de celles des systèmes optiques à tester.

Dans la cinquième variante, représentée sur la figure 6, les deux fréquences $f_1$ et $f_2$ sont deux fréquences fixes. Comme précédemment la valeur de ces fréquences $f_1$ et $f_2$ peut être comprise enter O et $v_c$, $v_c$ étant la fréquence de coupure du système optique 18.

Dans cette cinquième variante, le dispositif de l'invention comprend un système de déflexion 21 permettant d'envoyer le faisceau de référence 8 et le faisceau de mesure 10, émis par la cellule de Bragg, en direction du système optique à tester 18. Le système de déflexion qui peut être un système unidirectionnel ou bidirectionnel peut être constitué d'un déflecteur à miroir tournant, d'un déflecteur acousto-optique etc...

Pour les deux variantes décrites ci-dessus, la différence entre les deux fréquences d'excitation, c'est-à-dire $f_1 - f_2$ qui est constante, est choisie de façon que l'écart angulaire θ' entre le faisceau de référence 8 et le faisceau de mesure 10 sortant de la cellule de Bragg 12 soit au moins 100 fois plus faible que la valeur de l'ouverture du système optique à tester 18.

Il est à noter que par rapport aux autres variantes du dispositif de l'invention, le faisceau lumineux 8 et le faisceau de référence 10 peuvent jouer indifféremment le rôle de faisceau de référence ou le rôle de faisceau de mesure.

Après avoir traversé le système optique à tester 18, les faisceaux lumineux 8 et 10 donnent naissance, au niveau d'une fente 22, à un système de franges d'interférences sinusoïdales. Cette fente 22, qui peut être supprimée dans certains cas, notamment lorsque l'écart angulaire θ' est faible, est située dans le plan image du système optique à étudier. Etant donné que les deux faisceaux lumineux qui interfèrent ne présentent pas la même fréquence temporelle, $v_0 + f_1$ pour le faisceau 8 et $v_0 + f_2$ pour le faisceau 10, les franges d'interférences se translatent à une vitesse uniforme.

Le signal lumineux, résultant de la translation uniforme des franges interférences, peut être recueilli par un détecteur 24 tel qu'un photomultiplicateur, qui transforme ce signal lumineux en un signal électrique de fréquence égale à la différence des fréquences temporelles des faisceaux lumineux arrivant sur le détecteur, c'est-à-dire de fréquence $f_1 - f_2$. La phase de ce signal électrique représente la dérivée, par rapport à la fréquence spatiale v du signal lumineux issu du système optique 18, des déformations de surface d'onde introduites par le système optique 18, c'est-à-dire le rapport $d\varphi(v)/dv$. Cette phase peut être mesurée par un dispositif 26, qui peut être par exemple un phasemètre.

Comme précédemment, ce dispositif 26 compare la phase du signal électrique délivré par le détecteur 24 et la phase d'un signal électrique correspondant aux ondes radiofréquences émises par le générateur radiofréquence 16. Le signal électrique correspondant aux ondes radiofréquences émises par le générateur 16 est engendré par le générateur lui-même.

Le dispositif comprend encore un intégrateur 30, relié électriquement au dispositif de mesure 26, permettant d'intégrer, par rapport à la fréquence v, le signal fourni par le dispositif 26 afin d'obtenir la phase $\varphi(v)$ caractéristique des déformations de surface d'onde introduites par le système optique.

La mesure de ces déformation se fait comme décrit ci-dessus. Cependant, avant de mesurer ces déformations, il est nécessaire d'effectuer un étalonnage du dispositif afin de s'assurer que la phase du signal électrique, délivrée par le détecteur 24 est bien celle qui permettra, après intégration, l'obtenir la phase $\varphi(v)$ caractéristique du système optique que l'on étudie. Cet étalonnage consiste à mesurer l'évolution de la phase introduite par le dispositif de mesure lui-même, en plaçant le détecteur 24 directement dans le plan image de la lentille convergente 20, pour la quatrième variante du dispositif de l'invention (figure 5) ou bien en plaçant le détecteur 24 directement derrière le système de déflexion 21 pour la cinquième variante (figure 6) et ce, en l'absence du système optique à étudier.

**Revendications**

1. Dispositif pour tester, en lumière cohérente, un système optique transmissif (18) comprenant au moins un objectif, comportant:
— des moyens (2) susceptibles d'émettre un faisceau principal de lumière (4) monochromatique et cohérente;
— une cellule de Bragg (12) susceptible de recevoir au moins un faisceau (4, 8, 10) en provenance des moyens d'émission (2), cette cellule étant excitée par des ondes radiofréquences émises par un générateur radiofréquence (16) de façon à émettre un premier faisceau (8) et un second faisceau (10) présentant des fréquences temporelles différentes;
— des moyens (20, 21) envoyant le premier faisceau (8) et le second faisceau (10), émis par la cellule de Bragg (12) directement sur le système optique (18) à tester;
— des moyens de détection (24) aptes à transmettre le signal lumineux issu du système optique (18) en un signal électrique; et
— des moyens (26) permettant de mesurer le déphasage entre la phase du signal électrique émis par les moyens de détection (24) et la phase des ondes radiofréquences servant à exciter la cellule de Bragg (12), caractérisé en ce que:
— les moyens de détection reçoivent les premier et second faisceaux après qu'ils aient traversé le système optique sans traverser d'autres éléments optiques, sauf la fente d'entrée des moyens de détection, et produisent un signal électrique de fréquence égale à la différence des fréquences temporelles des faisceaux (8, 10) émis par la cellule de Bragg (12) et dont la phase est caractéristique des déformations de surface d'onde introduits par ledit système.

2. Dispositif de mesure selon la revendication 1, caractérisé en ce que la cellule de Bragg (12) est excitée par deux ondes radiofréquences de fréquences différentes de façon à engendrer, par diffraction du faisceau principal (4) le premier faisceau (8) et le second faisceau (10).

3. Dispositif de mesure selon la revendication 1, caractérisé en ce qu'il comprend des moyens (6) permettant de séparer le faisceau principal (4) en un premier faisceau (8) et en un second faisceau (10) et en ce que la cellule de Bragg (12) est excitée par une seule onde radiofréquence de façon à transmettre directement le premier faisceau (8) et à transmettre par diffraction le second faisceau (10).

4. Dispositif de mesure selon la revendication 3, caractérisé en ce que les moyens de séparation sont constitués par un cube séparateur (6).

5. Dispositif de mesure selon l'une quelconque des revendications 3 et 4, caractérisé en ce qu'il comprend après les moyens de séparation (6), des moyens (14) permettant de renvoyer le second faisceau (10) en direction de la cellule de Bragg (12), ce faisceau ayant été dévié par les moyens de séparation (6).

6. Dispositif de mesure selon l'une quelconque des revendications 1 à 5, caractérisé en ce que le fente (22) est située dans le plan image du système optique (18) à tester.

7. Dispositif de mesure selon la revendication 1, caractérisé en ce qu'il comprend un prisme (32) présentant la forme d'un coin de cube, situé dans le plan image du système optique (18) à tester, permettant de réfléchir le premier faisceau (8) et le second faisceau (10) vers les moyens de détection (24), la direction du premier faisceau (8) réfléchi et la direction du second faisceau (10) réfléchi étant respectivement opposées à la direction du premier faisceau (8) incident et à la direction du second faisceau (10) incident.

8. Dispositif de mesure selon la revendication 7, caractérisé en ce que la cellule de Bragg (12) est excitée par deux ondes radiofréquences de fréquences différentes de façon à engendrer, par diffraction du faisceau principal (4), le premier faisceau (8) et le second faisceau (10).

9. Dispositif de mesure selon la revendication 7, caractérisé en ce que, le cellule de Bragg (12) excitée par les deux ondes radiofréquences, étant apte à engendrer par diffraction du premier faisceau (8) et du second faisceau (10) réfléchis par le prisme (32), un faisceau secondaire (23) confondu avec le faisceau principal (4), des moyens de séparation (28) de ce faisceau secondaire et du faisceau principal sont prévus afin d'envoyer ledit faisceau secondaire (23) sur les moyens de détection (24).

10. Dispositif de mesure selon la revendication 9, caractérisé en ce que les moyens de séparation (28) du faisceau secondaire (23) et du faisceau principal (4) sont constitués par une lame semi-réfléchissante.

11. Dispositif de mesure selon la revendication 2, caractérisé en ce que la différence de fréquence entre la fréquence de l'une des ondes radiofréquences et la fréquence de l'autre onde radiofréquence étant constante, cette différence constante conduisant à l'émission d'un signal électrique, par les moyens de détection (24), dont la phase représente la dérivée, par rapport à la fréquence spatiale du signal lumineux issu du système optique (18), des déformations de surface introduites par le système optique à tester (18), le dispositif comprend, après les moyens de mesure (26), des moyens (30) permettant d'intégrer le signal fourni par les moyens de mesure afin d'obtenir la phase caractéristique desdites déformations.

12. Dispositif de mesure selon la revendication 11, caractérisé en ce que la différence des deux fréquences est telle que la valeur de l'écart angulaire ($\theta'$) entre le premier faisceau (8) et le second faisceau (10) sortant de la cellule de Bragg (12) soit au moins 100 fois plus faible que la valeur de l'ouverture du système optique à tester (18).

13. Dispositif de mesure selon l'une quelconque des revendications 11 et 12, caractérisé en ce que le générateur radiofréquence (16) émet deux fréquences variables.

14. Dispositif de mesure selon l'une quelconque des revendications 11 et 12, caractérisé en ce que le générateur radiofréquence (16) émet deux fréquences fixes.

15. Dispositif de mesure selon l'une quelconque des revendications 1 à 13, caractérisé en ce que les moyens (20, 21) permettant d'envoyer les premier et second faisceaux (8, 10), émis par la cellule de Bragg (12), en direction du système optique à tester (18) sont constitués d'au moins une lentille convergent (20).

16. Dispositif de mesure selon la revendication 14, caractérisé en ce que les moyens (20, 21) permettant d'envoyer les faisceaux (8) et (10), émis par la cellule de Bragg (12), en direction du système optique à tester (18) sont constitués d'un système de déflexion (21).

17. Dispositif de mesure selon l'une quelconque des revendications 9 à 14, caractérisé en ce que la fente (22) est située dans le plan image du système optique (18) à tester.

18. Dispositif de mesure selon l'une quelconque des revendications 1 à 17, caractérisé en ce que les moyens (2) émettant le faisceau principal (4) de lumière monochromatique et cohérente sont constitués par un laser.

19. Dispositif de mesure selon l'une quelconque des revendications 1 à 18, caractérisé en ce que les moyens de mesure (26) sont constitués par un phasemètre.

20. Procédé pour tester en lumière cohérente, un système optique transmissif (18), consistant à:

a) diriger sur une cellule de Bragg (12) au moins un faisceau (4, 8, 10) de lumière monochromatique et cohérente;

b) exciter cette cellule, par des ondes radiofréquences émises par un générateur radiofréquence (16), de façon à émettre un premier faisceau (8) et un second faisceau (10) présentant des fréquences temporelles différentes;

c) envoyer directement sur le système optique à tester (18) le premier faisceau (8) et le second faisceau (10) émis par ladite cellule (12);

d) détecter le signal lumineux issu du système optique (18) à tester au moyen d'un détecteur (24) apte à transformer ce signal lumineux en un signal électrique; et,

e) mesurer le déphasage entre la phase du signal électrique émis par le détecteur (24) et la phase des ondes radiofréquences servant à exciter la cellule de Bragg, caractérisé en ce qu'il consiste également à recevoir les premier et second faisceaux après qu'ils aient traversé le système optique sans traverser d'autres éléments, sauf la fente d'entrée des moyens de détection, pour que ces moyens produisent un signal électrique de fréquence égale à la différence des fréquences temporelles des faisceaux (8, 10) émis par la cellule de Bragg (12) et dont la phase est caractéristique des déformations de surface d'onde introduites par ledit système.

21. Procédé de mesure selon la revendication 20, caractérisé en ce que l'on envoie sur la cellule de Bragg (12) un faisceau lumineux principal (4) et en ce que l'on excite ladite cellule au moyen de deux ondes radiofréquences de fréquences différentes de façon à engendrer le premier faisceau (8) et le second faisceau (10) par diffraction du faisceau principal (4).

22. Procédé de mesure selon la revendication 20, caractérisé en ce que l'on envoie sur la cellule de Bragg (12) le premier faisceau (8) et le second faisceau (10) et en ce que l'on excite ladite cellule au moyen d'une seule onde radiofréquence de façon à transmettre directement le premier faisceau (8) et à transmettre le second faisceau (10) par diffraction.

23. Procédé de mesure selon l'une quelconque des revendications 20 à 22, caractérisé en ce que, avant de mesurer les déformations de surface d'onde introduites par le système optique à tester (18), on étalonne le dispositif en déterminant l'évolution de la phase du signal électrique émis par le détecteur (24), cet étalonnage étant fait en l'absence du système optique à tester et en plaçant une fente (22) directement dans le plan image d'une lentille convergente (20), servant à envoyer sur le système optique à tester (18) les premier et second faisceaux (8, 10), émis par la cellule de Bragg (12).

24. Procédé de mesure selon la revendication 20, caractérisé en ce qu'après l'étape c, on réfléchit le premier faisceau (8) et le second faisceau (10) issus du système optique (18) au moyen d'un prisme (32) présentant la forme d'un coin de cube, situé dans le plan image du système optique (18) à tester, de façon que la direction du premier faisceau (8) réfléchi et la direction du second faisceau (10) réfléchi soient respectivement opposées à la direction du premier faisceau (8) incident et à la direction du second faisceau (10) incident, puis on détecte le signal lumineux issu du prisme au moyen du détecteur (24).

25. Procédé de mesure selon la revendication 24, caractérisé en ce que l'on envoie sur la cellule de Bragg (12) un faisceau lumineux principal (4) et en ce que l'on excite ladite cellule au moyen de deux ondes radiofréquences de fréquences différentes de façon à engendrer le premier faisceau (8) et le second faisceau (10) par diffraction du faisceau principal (4).

26. Procédé de mesure selon la revendication 25, caractérisé en ce que la cellule de Bragg (12), excitée par les deux ondes radiofréquences, étant apte à engendrer par diffraction du premier faisceau (8) et du second faisceau (10) réfléchis par le prisme (32), un faisceau secondaire (23) confondu avec le faisceau principal (4), on sépare le faisceau secondaire (23) du faisceau principal (4) de façon à envoyer ledit faisceau secondaire sur les moyens de détection (24).

27. Procédé de mesure selon l'une quelconque des revendications 24 à 26, caractérisé en ce que avant de mesurer les déformations de surface d'onde introduites par les système optique à tester (18), on étalonne le dispositif en déterminant l'évolution de la phase du signal électrique émis par le détecteur (24), cet étalonnage étant fait en l'absence du système optique à tester et en plaçant le prisme (32) directement dans le plan image d'une lentille convergente (20) servant à envoyer sur le système optique à tester (18) les premier et second faisceaux (8, 10), émis par le cellule de Bragg (12).

28. Procédé de mesure selon la revendication 21, caractérisé en ce que, la différence de fréquence entre la fréquence de l'une des ondes radiofréquences et la fréquence de l'autre onde radiofréquence étant constante, cette différence constante conduisant à l'émission, par le détecteur (24), d'un signal électrique dont la phase représente la dérivée, par rapport à la fréquence spatiale du signal lumineux issu du système optique (18), des déformations de surface d'onde introduites par le système optique à tester (18), on réalise, après l'étape e, une intégration du signal fourni par les moyens de mesure (26) au moyen d'un intégrateur (30) afin d'obtenir la phase caractéristique desdites déformations.

29. Procédé de mesure selon la revendication 28, caractérisé en ce que, avant de mesurer les déformations de surface d'onde introduites par le système optique à tester (18), on étalonne le dispositif en déterminant l'évolution de la phase du signal électrique émis par le détecteur (24), cet étalonnage étant fait en l'absence du système optique à tester et en plaçant le détecteur (24) directement dans le plan image d'une lentille convergente (20), servant à envoyer sur le système optique à tester (18) les premier et second faisceaux (8, 10), émis par la cellule de Bragg (12).

30. Procédé de mesure selon la revendication 28, caractérisé en ce que, avant de mesurer les déformations de surface d'onde introduites par le système optique à tester (18), on étalonne le dispositif en déterminant l'évolution de la phase du signal électrique émis par le détecteur (24), cet étalonnage étant fait en l'absence du système optique à tester et en plaçant le détecteur (24) directement derrière un système de déflexion (21), servant à envoyer sur le système optique à tester (18) les premier et second faisceaux (8, 10), émis par la cellule de Bragg (12).

31. Procédé de mesure selon l'une quelconque des revendications 20 à 30, caractérisé en ce que l'on modifie de façon continue la fréquence des ondes radiofréquences par action directe sur le générateur radiofréquence (16).

**Patentansprüche**

1. Vorrichtung zum Prüfen eines mindestens eine Linse aufweisenden, durchlassenden optischen Systems (18) in kohärentem Licht, umfassend:
— Mittel (2) zum Aussenden eines monochromatischen und kohärenten Hauptlichtstrahls (4);
— eine Bragg-Zelle (12) zum Empfangen wenigstens eines von den Emissionsmitteln (2) herkommenden Strahls (4, 8, 10), wobei diese Zelle mit von einem Hochfrequenzgenerator (16) abgegebenen Hochfrequenzwellen derart erregbar ist, daß ein erster Strahl (8) und ein zweiter Strahl (10) ausgesandt werden, die zeitlich unterschiedliche Frequenzen aufweisen;
— Mittel (20, 21), die den ersten Strahl (8) und den zweiten Strahl (10), die von der Bragg-Zelle (12) ausgesendet werden, unmittelbar auf das zu prüfende optische System (18) richten;
— Erfassungsmittel (24), mit denen das von dem optische System (18) abgegebene Lichtsignal in ein elektrisches Signal umwandelbar ist; und
— Mittel (26), mit denen die Phasenverschiebung zwischen der Phase des von den Erfassungsmitteln (24) ausgesandten elektrischen Signals und der Phase der der Erregung der Bragg-Zelle (12) dienenden Hochfrequenzwellen meßbar ist, dadurch gekennzeichnet, daß
— die Erfassungsmittel den ersten und den zweiten Strahl empfangen, nachdem sie das optische System durchquert haben, ohne andere optische Elemente mit Ausnahme des Eintrittsspaltes der Erfassungsmittel zu durchqueren, und ein elektrisches Signal mit einer Frequenz erzeugen, die gleich dem Unterschied der zeitlichen Frequenzen der von der Bragg-Zelle (12) ausgesandten Strahlen (8, 10) ist, wobei dessen Phase charakteristisch für die durch das System eingeführten Verformungen der Wellenoberfläche ist.

2. Vorrichtung zum Messen nach Anspruch 1, dadurch gekennzeichnet, daß die Bragg-Zelle (12) von zwei Hochfrequenzwellen unterschiedlicher Frequenz derart erregt wird, daß durch Beugung des Hauptstrahls (4) der erste Strahl (8) und der zweite Strahl (10) erzeugt werden.

3. Vorrichtung zum Messen nach Anspruch 1, dadurch gekennzeichnet, daß sie Mittel (6) umfaßt, mit denen der Hauptstrahl (4) in einen ersten Strahl (8) und eine zweiten Strahl (10) teilbar ist, und daß die Bragg-Zelle (12) durch eine einzige Hochfrequenzwelle derart erregbar ist, daß der erste Strahl (8) unmittelbar und der zweite Strahl (10) durch Beugung übertragen wird.

4. Vorrichtung zum Messen nach Anspruch 3, dadurch gekennzeichnet, daß die Trennmittel durch einen Teilerwürfel (6) gebildet sind.

5. Vorrichtung zum Messen nach Anspruch 3 oder 4, dadurch gekennzeichnet, daß sie hinter den Trennmitteln (6) Mittel (14) aufweist, die ermöglichen, den zweiten Strahl (10) in Richtung zu der Bragg-Zelle (12) zu lenken, wobei dieser Strahl durch die Trennmittel (6) abgelenkt worden war.

6. Vorrichtung zum Messen nach einem der Ansprüche 1 bis 5, dadurch gekennzeichnet, daß sich der Spalt (22) in der Bildebene des zu prüfenden optischen Systems (18) befindet.

7. Vorrichtung zum Messen nach Anspruch 1, dadurch gekennzeichnet, daß sie ein die Form einer Würfelecke aufweisendes Prisma (32) umfaßt, welches in der Bildebene des zu prüfenden optischen Systems (18) angeordnet ist und ermöglicht, den ersten Strahl (8) und den zweiten Strahl (10) zu den Erfassungsmitteln (24) hin zu reflektieren, wobei die Richtung des reflektierten ersten Strahls (8) und die Richtung des reflektierten zweiten Strahls (10) jeweils entgegengesetzt zu der Richtung des einfallenden ersten Strahls (8) bzw. zu der Richtung des einfallenden zweiten Strahls (10) ist.

8. Vorrichtung zum Messen nach Anspruch 7, dadurch gekennzeichnet, daß die Bragg-Zelle (12) von zwei Hochfrequenzwellen unterschiedlicher Frequenzen derart erregbar ist, daß durch Beugung des Hauptstrahls (4) der erste Strahl (8) und der zweite Strahl (10) erzeugbar sind.

9. Vorrichtung zum Messen nach Anspruch 7, dadurch gekennzeichnet, daß mit der von den zwei Hochfrequenzwellen angeregten Bragg-Zelle (12) durch Beugung des ersten Strahls (8) und des zweiten Strahls (10), die von dem Prisma (32) reflektiert werden, ein mit dem Hauptstrahl (4) zusammenfallender sekundärer Strahl (23) erzeugbar ist, daß Trennmittel (28) für diesen sekundären Strahl und den Hauptstrahl vorgesehen sind, um den sekundären Strahl (23) auf die Erfassungsmittel (24) zu richten.

10. Vorrichtung zum Messen nach Anspruch 9, dadurch gekennzeichnet, daß die Trennmittel (28) für den sekundären Strahl (22) und den Hauptstrahl (4) von einem halbdurchlässigen Plättchen gebildet sind.

11. Vorrichtung zum Messen nach Anspruch 2, dadurch gekennzeichnet, daß der Frequenzunterschied zwischen der Frequenz von einer der Hochfrequenzwellen und der Frequenz der anderen der Hochfrequenzwellen konstant ist, daß diese konstante Differenz zur Abgabe eines elektrischen Signals von dem Erfassungsmittel (24) führt, dessen Phase die Abgeleitete der von dem zu prüfenden optischen System (18) eingeführten Oberflächenverformungen in Bezug auf die Raumfrequenz des von dem optischen System (18) abgegebenen Lichtsignals darstellt, daß die Vorrichtung hinter den Meßmitteln (26)

Mittel (30) umfaßt, mit denen das von den Meßmitteln gelieferte Signal integrierbar ist, um schließlich die charakteristische Phase der genannten Verformungen zu erhalten.

12. Vorrichtung zum Messen nach Anspruch 11, dadurch gekennzeichnet, daß der Unterschied der zwei Frequenzen derart ist, daß der Wert des Winkelabstandes (θ') zwischen dem ersten Strahl (8) und dem zweiten Strahl (10), die aus der Bragg-Zelle (12) austreten, wenigstens hundertmal kleiner als der Öffnungswert des zu pröfenden optischen Systems (18) ist.

13. Vorrichtung zum Messen nach Anspruch 11 oder 12, dadurch gekennzeichnet, daß der Hochfrequenzgenerator (16) zwei veränderbare Frequenzen abgibt.

14. Vorrichtung zum Messen nach Anspruch 11 oder 12, dadurch gekennzeichnet, daß der Hochfrequenzgenerator (16) zwei feste Frequenzen abgibt.

15. Vorrichtung zum Messen nach einem der Ansprüche 1 bis 13, dadurch gekennzeichnet, daß die Mittel (20, 21), die ermöglichen, den ersten und den zweiten Strahl (8, 10), die von der Bragg-Zelle (12) ausgehen, in Richtung zu dem zu pröfenden optischen System (18) zu lenken, durch wenigstens eine Sammellinse gebildet sind.

16. Vorrichtung zu Messen nach Anspruch 14, dadurch gekennzeichnet, daß die Mittel (20, 21), die ermöglichen, die Strahlen (8) und (10), die von der Bragg-Zelle (12) ausgesandt werden, in Richtung zu dem zu prüfenden optischen System (18) zu lenken, durch ein Ablenkungssystem (21) gebildet sind.

17. Vorrichtung zum Messen nach einem der Ansprüche 9 bis 14, dadurch gekennzeichnet, daß sich der Spalt (22) in der Bildebene des zu prüfenden optischen Systems (18) befindet.

18. Vorrichtung zum Messen nach einem der Ansprüche 1 bis 17, dadurch gekennzeichnet, daß die den Hauptstrahl (4) aus monochromatischem und kohärentem Licht aussendenden Mittel (2) ein Laser sind.

19. Vorrichtung zum Messen nach einem der Ansprüche 1 bis 18, dadurch gekennzeichnet, daß die Meßmittel (26) von einem Phasenmesser gebildet sind.

20. Verfahren zum Prüfen eines durchlassenden optischen Systems (18) in kohärentem Licht, welches umfaßt:

a) wenigstens einen monochromatischen und kohärenten Lichtstrahl auf eine Bragg-Zelle (12) zu richten;

b) diese Zelle durch von einem Hochfrequenzgenerator (16) abgegebene Hochfrequenzwellen derart zu erregen, daß ein erster Strahl (8) und ein zweiter Strahl (10) mit zeitlich unterschiedlichen Frequenzen ausgesandt werden;

c) den ersten Strahl (8) und den zweiten Strahl (10), die von der Zelle (12) ausgesandt werden, unmittelbar auf das zu prüfende optische System (18) zu richten;

d) das von dem zu prüfenden optischen System (18) abgegebene Lichtsignal mittels einer Erfassungseinrichtung (24) zu erfassen, mit der dieses Lichtsignal in ein elektrisches Signal umwandelbar ist; und

e) die Phasenverschiebung zwischen der Phase des von der Erfassungseinrichtung (24) ausgesandten elektrischen Signals und der Phase der Hochfrequenzwellen zu messen, die zur Anregung der Bragg-Zelle dienen, dadurch gekennzeichnet, daß das Verfahren darin besteht, ebenfalls den ersten und den zweiten Strahl zu empfangen, nachdem sie durch das optische System hindurch gegangen sind, ohne daß sie durch andere Elemente mit Ausnahme des Eintrittsspaltes der Erfassungsmittel hindurch gegangen sind, damit diese Mittel ein elektrisches Signal erzeugen, dessen Frequenz gleich dem Unterschied der zeitlichen Frequenzen der Strahlen (8, 10) ist, die von der Bragg-Zelle (12) ausgehen, und dessen Phase charakteristisch für die von dem System eingeführten Verformungen der Wellenoberfläche ist.

21. Verfahren zum Messen nach Anspruch 20, dadurch gekennzeichnet, daß auf die Bragg-Zelle (12) ein Hauptlichtstrahl (4) gerichtet wird und daß die Zelle mittels zweier Hochfrequenzwellen unterschiedlicher Frequenzen derart erregt wird, daß der erste Strahl (8) und der zweite Strahl (10) durch Beugung des Hauptstrahls (4) erzeugt werden.

22. Verfahren zum Messen nach Anspruch 20, dadurch gekennzeichnet, daß der erste Strahl (8) und der zweite Strahl (10) auf die Bragg-Zelle (12) gerichtet werden und daß die Zelle mittels einer einzigen Hochfrequenzwelle derart engeregt wird, daß der erste Strahl (8) unmittelbar und der zweite Strahl (10) durch Beugung übertragen wird.

23. Verfahren zum Messen nach einem der Ansprüche 20 bis 22, dadurch gekennzeichnet, daß vor dem Messen der durch das zu prüfende optische System (18) eingeführten Verformungen der Wellenoberfläche die Vorrichtung dadurch geeicht wird, daß die Entwicklung der Phase des von der Erfassungseinrichtung (24) abgegebenen elektrischen Signals bestimmt wird, wobei diese Eichung bei Abwesenheit des zu prüfenden optischen Systems vorgenommen und ein Spalt (22) unmittelbar in der Bildebene einer Sammellinse (20) angeordnet wird, die dazu dient, auf das zu prüfende optische System (18) den ersten und zweiten Strahl (8, 10) zu richten, die von der Bragg-Zelle (12) ausgehen.

24. Verfahren zum Messen nach Anspruch 20, dadurch gekennzeichnet, daß nach dem Schritt c) der erste Strahl (8) und der zweite Strahl (10), die von dem optischen System (18) ausgehen, mittels eines sich in der Bildebene des zu prüfenden optischen Systems (18) befindenden, die Form einer Würfelecke aufweisenden Prismas (32) derart reflektiert werden, daß die Richtung des reflektierten ersten Strahls (8) und die Richtung des reflektierten zweiten Strahls (10) jeweils entgegengesetzt zu der Richtung des einfallenden ersten Strahls (8) bzw. der Richtung des einfallenden zweiten Strahls (10) sind, daß man daraufhin das von dem Prisma ausgehende Lichtsignal mittels der Erfassungseinrichtung (24) erfaßt.

25. Verfahren zum Messen nach Anspruch 24, dadurch gekennzeichnet, daß auf die Bragg-Zelle (12) ein Hauptlichtstrahl (4) gerichtet wird und daß die Zelle mittels zweier Hochfrequenzwellen unterschiedlicher Frequenzen derart erregt wird, daß der erste Strahl (8) und der zweite Strahl (10) durch Beugung des Hauptstrahls (4) erzeugt werden.

26. Verfahren zum Messen nach Anspruch 25, dadurch gekennzeichnet, daß mit der durch die zwei Hochfrequenzwellen angeregten Bragg-Zelle (12) durch Beugung des ersten Strahls (8) und des zweiten Strahls (10), die von dem Prisma (32) reflektiert werden, ein mit dem Hauptstrahl (4) zusammenfallender, sekundärer Strahl (23) erzeugt werden kann, und daß der sekundäre Strahl (23) von dem Hauptstrahl (4) derart abgetrennt wird, daß der sekundäre Strahl auf die Erfassungsmittel (24) gerichtet wird.

27. Verfahren zum Messen nach einem der Ansprüche 24 bis 26, dadurch gekennzeichnet, daß vor dem Messen der durch das zu prüfende optische System (18) eingeführten Verformungen der Wellenoberfläche die Vorrichtung dadurch geeicht wird, daß die Entwicklung der Phase des von der Erfassungseinrichtung (24) abgegebenen, elektrischen Signals bestimmt wird, wobei diese Eichung bei Abwesenheit des zu prüfenden optischen Systems durchgeführt wird und das Prisma (32) unmittelbar in der Bildebene einer Sammellinse (20) angeordnet wird, die dazu dient, auf das zu prüfende optische System (18) den ersten und zweiten Strahl (8, 10) zu richten, die von der Bragg-Zelle (12) ausgehen.

28. Verfahren zum Messen nach Anspruch 21, dadurch gekennzeichnet, daß der Frequenzunterschied zwischen der Frequenz der einen der Hochfrequenzwellen und der Frequenz der anderen der Hochfrequenzwellen konstant ist, wobei dieser konstante Unterschied zur Abgabe eines elektrischen Signals von der Erfassungseinrichtung (24) führt, dessen Phase in Bezug auf die Raumfrequenz des von dem optischen System (18) abgegebenen Lichtsignals die Ableitung der durch das zu prüfende optische System (18) eingeführten Verformungen der Wellenoberfläche darstellt, und daß man nach dem Schritt e) das von den Meßmitteln (26) gelieferte Signal mittels einer Integrationseinrichtung (30) integriert, um die für die Verformungen charakteristische Phase zu erhalten.

29. Verfahren zum Messen nach Anspruch 28, dadurch gekennzeichnet, daß vor dem Messen der durch das zu prüfende optische System (18) eingeführten Verformungen der Wellenoberfläche die Vorrichtung dadurch geeicht wird, daß die Entwicklung der Phase des elektrischen Signals, welches von der Erfassungseinrichtung (24) abgegeben wird, bestimmt wird, wobei diese Eichung bei Abwesenheit des zu prüfenden optischen Systems durchgeführt und die Erfassungseinrichtung (24) unmittelbar in der Bildebene einer Sammellinse (20) angeordnet wird, die dazu dient, auf das zu prüfende optischen System (18) den ersten und zweiten Strahl (8, 10) zu richten, die von der Bragg-Zelle (12) abgegeben werden.

30. Verfahren zum Messen nach Anspruch 28, dadurch gekennzeichnet, daß vor dem Messen der durch das zu prüfende optische System (18) eingeführten Verformungen der Wellenoberfläche die Vorrichtung dadurch geeicht wird, daß die Entwicklung der Phase des von der Erfassungseinrichtung (24) abgegebenen elektrischen Signals bestimmt wird, wobei diese Eichung bei Abwesenheit des zu prüfenden Optischen Systems durchgeführt und die Erfassungseinrichtung (24) unmittelbar hinter einem Ablenksystem (21) angeordnet wird, welches dazu dient, auf das zu prüfende optische System (18) den ersten und zweiten Strahl (8, 10) zu richten, die von der Bragg-Zelle ausgehen.

31. Verfahren zum Messen nach einem der Ansprüche 20 bis 30, dadurch gekennzeichnet, daß die Frequenz der Hochfrequenzwellen kontinuierlich durch unmittelbares Einwirken auf den Hochfrequenzgenerator (16) verändert wird.

**Claims**

1. A device for testing, in coherent light, an optical transmission system (18) comprising at least one objective, which device comprises: means (2) capable of emitting a principal beam of monochromatic and coherent light (4); a Bragg cell (12) capable of receiving at least one beam (4, 8, 10) originating from the emitting means (2), this cell being excited by radio-frequency waves emitted by a radio-frequency generator (16) in such a manner as to emit a first beam (8) and a second beam (10) exhibiting differing temporal frequencies; means (20, 21) directing the first beam (8) and the second beam (10), emitted by the Bragg cell (12) directly to the optical system (18) to be tested; detecting means (24) suitable to convert the light signal emitted by the optical system (18) into an electrical signal; and means (26) permitting measurement of the phase difference between the phase of the electrical signal emitted by the detecting means (24) and the phase of the radio-frequency waves serving to excite the Bragg cell (12), characterized in that: the detecting means receive the first and second beams after they have passed through the optical system without passing through other optical elements, except the entrance slit of the detecting means, and produce an electrical signal of frequency equal to the difference of the temporal frequencies of the beams (8, 10) emitted by the Bragg cell (12) and the phase of which is characteristic of the wave surface deformations introduced by the said system.

2. Measurement device according to Claim 1, characterized in that the Bragg cell (12) is excited by two radio-frequency waves of differing frequencies, in such a manner as to generate, by diffraction of the principal beam (4), the first beam (8) and the second beam (10).

3. Measurement device according to Claim 1, characterized in that it includes means (6) permitting separation of the principal beam (4) into a first beam (8) and into a second beam (10), and in that the Bragg cell (12) is excited by a single radio-frequency wave in such a manner as to transmit the first beam (8) directly and to transmit the second beam (10) by diffraction.

4. Measurement device according to Claim 3, characterized in that the separating means comprise a separating cube (6).

5. Measurement device according to either one of Claims 3 and 4, characterized in that it includes, after the separating means (6), means (14) permitting deflection of the second beam (10) in the direction of the Bragg cell (12), this beam having been deviated by the separating means (6).

6. Measurement device according to any one of Claims 1 to 5, characterized in that the slit (22) is situated in the image plane of the optical system (18) to be tested.

7. Measurement device according to Claim 1, characterized in that it includes a prism (32) exhibiting the shape of a vertex of a cube, situated in the image plane of the optical system (18) to be tested, permitting reflection of the first beam (8) and the second beam (10) towards the detecting means (24), the direction of the first reflected beam (8) and the direction of the second reflected beam (10) being opposed to the direction of the first incident beam (8) and to the direction of the second incident beam (10) respectively.

8. Measurement device according to Claim 7, characterized in that the Bragg cell (12) is excited by two radio-frequency waves of differing frequencies in such a manner as to generate, by diffraction of the principal beam (4), the first beam (8) and the second beam (10).

9. Measurement device according to Claim 7, characterized in that, the Bragg cell (12) excited by the two radio-frequency waves being suitable to generate, by diffraction of the first beam (8) and of the second beam (10) reflected by the prism (32), a secondary beam (23) coincident with the principal beam (4), means (28) for separating this secondary beam and the principal beam are provided in order to direct the said secondary beam (23) to the detecting means (24).

10. Measurement device according to Claim 9, characterized in that the means (28) for separating the secondary beam (23) and the principal beam (4) comprise a semireflecting plate.

11. Measurement device according to Claim 2, characterized in that the difference in frequency between the frequency of one of the radio-frequency waves and the frequency of the other radio-frequency wave being constant, this constant difference leading to the emission of an electrical signal, by the detecting means (24), the phase of which represents the derivative, with respect to the spatial frequency of the light signal emitted by the optical system (18), of the surface deformations introduced by the optical system to be tested (18), the device includes, after the measuring means (26), means (30) permitting integration of the signal provided by the measuring means, in order to obtain the characteristic phase of the said deformations.

12. Measurement device according to Claim 11, characterized in that the difference of the two frequencies is such that the value of the angular displacement ($\theta'$) between the first beam (8) and the second beam (10) emerging from the Bragg cell (12) is at least 100 times smaller than the value of the aperture of the optical system to be tested (18).

13. Measurement device according to either one of Claims 11 and 12, characterized in that the radio-frequency generator (16) emits two variable frequencies.

14. Measurement device according to either one of Claims 11 and 12, characterized in that the radio-frequency generator (16) emits two fixed frequencies.

15. Measurement device according to any one of Claims 1 to 13, characterized in that the means (20, 21) permitting directing of the first and second beams (8, 10), emitted by the Bragg cell (12), in the direction of the optical system to be tested (18) comprise at least one converging lens (20).

16. Measurement device according to Claim 14, characterized in that the means (20, 21) permitting directing of the beams (8) and (10), emitted by the Bragg cell (12), in the direction of the optical system to be tested (18) comprise a deflecting system (21).

17. Measurement device according to any one of Claims 9 to 14, characterized in that the slit (22) is situated in the image plane of the optical system (18) to be tested.

18. Measurement device according to any one of Claims 1 to 17, characterized in that the means (2) emitting the principal beam (4) of monochromatic and coherent light comprise a laser.

19. Measurement device according to any one of Claims 1 to 18, characterized in that the measuring means (26) comprise a phase meter.

20. Process for testing, in coherent light, an optical transmission system (18), comprising the steps of:

a) directing at least one beam (4, 8, 10) of monochromatic and coherent light to a Bragg cell (12);

b) exciting this cell, by radio-frequency waves emitted by a radio-frequency generator (16), in such a manner as to emit a first beam (8) and a second beam (10) exhibiting differing temporal frequencies;

c) directing the first beam (8) and the second beam (10), emitted by the said cell (12), directly to the optical system to be tested (18);

d) detecting the light signal emitted by the optical system (18) to be tested, by means of a detector (24) suitable to convert this light signal into an electrical signal; and

e) measuring the phase difference between the phase of the electrical signal emitted by the detector (24) and the phase of the radio-frequency waves serving to excite the Bragg cell, characterized in that it further comprises the step of receiving the first and second beams after they have passed through the optical system, without passing through other elements, except the entrance slit of the detecting means, in order that these means should produce an electrical signal of frequency equal to the difference of the temporal frequencies of the beams (8, 10) emitted by the Bragg cell (12) and the phase of which is characteristic of the wave surface deformations introduced by the said system.

21. Process for measurement according to Claim 20, characterized in that a principal light beam (4) is directed to the Bragg cell (12), and in that the said cell is excited by means of two radio-frequency waves of differing frequencies, in such a manner as to generate the first beam (8) and the second beam (10) by diffraction of the principal beam (4).

22. Process for measurement according to Claim 20, characterized in that the first beam (8) and the second beam (10) are directed to the Bragg cell (12), and in that the said cell is excited by means of a single radio-frequency wave, in such a manner as to transmit the first beam (8) directly and to transmit the second beam (10) by diffraction.

23. Process for measurement according to any one of Claims 20 to 22, characterized in that, before measuring the wave surface deformations introduced by the optical system to be tested (18), the device is calibrated by determining the development of the phase of the electrical signal emitted by the detector (24), such calibration being effected in the absence of the optical system to be tested and by placing a slit (22) directly in the image plane of a converting lens (20), serving to direct to the optical system to be tested (18) the first and second beams (8, 10) emitted by the Bragg cell (12).

24. Process for measurement according to Claim 20, characterized in that, after the step c, the first beam (8) and the second beam (10) emitted by the optical system (18) are reflected by means of a prism (32) exhibiting the shape of a vertex of a cube, situated in the image plane of the optical system (18) to be tested, in such a manner that the direction of the first reflected beam (8) and the direction of the second reflected beam (10) are opposed to the direction of the first incident beam (8) and to the direction of the second incident beam (10) respectively, and the light signal emitted by the prism is then detected by means of the detector (24).

25. Process for measurement according to Claim 24, characterized in that a principal light beam (4) is directed to the Bragg cell (12), and in that the said cell is excited by means of two radio-frequency waves of differing frequencies, in such a manner as to generate the first beam (8) and the second beam (10) by diffraction of the principal beam (4).

26. Process for measurement according to Claim 25, characterized in that, the Bragg cell (12) excited by the two radio-frequency waves being suitable to generate, by diffraction of the first beam (8) and of the second beam (10) reflected by the prism (32), a secondary beam (23) coincident with the principal beam (4), the secondary beam (23) is separated from the principal beam (4) in such a manner as to direct the said secondary beam to the detecting means (24).

27. Process for measurement according to any one of Claims 24 to 26, characterized in that, prior to measuring the wave surface deformations introduced by the optical system to be tested (18), the device is calibrated by determining the development of the phase of the electrical signal emitted by the detector (24), such calibration being effected in the absence of the optical system to be tested and by placing the prism (32) directly in the image plane of a converging lens (20) serving to direct to the optical system to be tested (18) the first and second beams (8, 10) emitted by the Bragg cell (12).

28. Process for measurement according to Claim 21, characterized in that, the difference in frequency between the frequency of one of the radio-frequency waves and the frequency of the other radio-frequency wave being constant, this constant difference leading to the emission, by the detector (24), of an electrical signal, the phase of which represents the derivative, with respect to the spatial frequency of the light signal emitted by the optical system (18), of the wave surface deformations introduced by the optical system to be tested (18), there is performed, after the step e, an integration of the signal supplied by the measuring means (26) by means of an integrator (30), in order to obtain the characteristic phase of the said deformations.

29. Process for measurement according to Claim 28, characterized in that, prior to measuring the wave surface deformations introduced by the optical system to be tested (18), the device is calibrated by determining the development of the phase of the electrical signal emitted by the detector (24), such calibration being effected in the absence of the optical system to be tested and by placing the detector (24) directly in the image plane of a converging lens (20), serving to direct to the optical system to be tested (18) the first and second beams (8, 10) emitted by the Bragg cell (12).

30. Process for measurement according to Claim 28, characterized in that, prior to measuring the wave surface deformations introduced by the optical system to be tested (18), the device is calibrated by determining the development of the phase of the electrical signal emitted by the detector (24), such calibration being effected in the absence of the optical system to be tested and by placing the detector (24) directly behind a deflecting system (21), serving to direct to the optical system to be tested (18) the first and second beams (8, 10) emitted by the Bragg cell (12).

31. Process for measurement according to any one of Claims 20 to 30, characterized in that the frequency of the radio-frequency waves is modified in a continuous manner by direct action on the radio-frequency generator (16).

FIG. 1

FIG. 2

# FIG.3

FIG.4

FIG.5

$\wp(\nu)$

FIG.6

$\wp(\nu)$